# EUROPEAN PATENT SPECIFICATION

(11) **EP 3 758 086 B1**
(45) Date of publication and mention of the grant of the patent: **02.07.2025**
(21) Application number: 19200881.1
(22) Date of filing: 01.10.2019
(51) Int. Cl.: H01M 10/04, H01M 10/6551, H01M 50/213, H01M 50/227, H01M 50/262, H01M 50/271, H01M 50/30, H01M 50/528

(54) **LARGE-CAPACITY UNIT CELL**
GROSSKAPAZITÄTS-EINHEITSZELLE
CELLULE UNITAIRE DE GRANDE CAPACITÉ

(30) Priority: 27.06.2019 CN 201920990031 U
(43) Date of publication of application: 30.12.2020
(73) Proprietor: PP&T TECHNOLOGIES LIMITED, Wanchai (HK)
(72) Inventor: HUANG, YUANHUA, Beijing, Beijing 101318 (CN)
(74) Representative: Isern Patentes y Marcas S.L.

(56) References cited:
- EP-A1- 2 296 205
- EP-A1- 2 378 590
- EP-A1- 2 557 609
- CN-A- 101 728 493
- KR-A- 20090 008 071
- US-A1- 2016 301 118

## Description

### Technical Field

The present invention relates to the field of battery technologies, and in particular to a large-capacity unit cell.

### Background Art

With the continuous development of electric vehicles, power batteries providing energy for electric vehicles have become a hot topic of research. Currently, according to package forms of power batteries, the power batteries may be classified into three types: a cylindrical type, a prismatic type, and a pouch type. Cylindrical batteries have been applied to many vehicle models due to their long development time, great advantages in consistency, and their mature manufacturing processes and low costs.

In the prior art, an electrode group of a cylindrical battery is of a wound type. In a production process, electrode sheets and a separator are wound around the winding core of a winder, and after a winding radius is reached, an electrode group formed by winding the electrode sheets and the separator is pulled from the winding core for battery assembly. However, the larger the winding radius of the electrode group is, the tighter the winding is always, and when the electrode group is pulled, the greater the friction between the electrode group and the winding core is, and the greater the force applied when the electrode group is pulled from the winding core is, which causes electrode sheets at layers to be more prone to dislocation, the separator inside the electrode group to be also more vulnerable to a pull, and thus easily leads to short circuit and a potential security hazard. Therefore, for a unit cell with a wound-type electrode group, the winding radius of the electrode group is always relatively small, that is, the total length of electrode sheets is always relatively short, and the length of an electrode sheet is proportional to the capacity of a battery, such that the capacity of the unit cell with the wound-type electrode group is usually relatively small.

EP 2 557 609 A1 discloses a high-voltage rechargeable battery or a large-capacity rechargeable battery that can be configured with a simple structure.

EP 2 378 590 A1 describes a secondary battery capable of easily welding a plurality of taps of jelly-rolls to cans by an insulator including spacers that can fix each jelly-roll when implementing a medium and large battery with the plurality of jelly-rolls.

### Summary of the Invention

The objective of the present invention is to provide a large-capacity unit cell, to alleviate the technical problem in the prior art that the capacity of a unit cell with a wound-type electrode group is relatively small.

The large-capacity unit cell provided in the present invention is as defined in present claim 1.

Further, the electrode group module further comprises a positive electrode tab and a negative electrode tab, the positive electrode tab is arranged between the positive electrode terminal cover and the positive electrode terminal of the electrode group, and the negative electrode tab is arranged between the negative electrode terminal cover and the negative electrode terminal of the electrode group;
the positive electrode tab is fixedly connected to the positive electrode terminal cover, and is connected to the central shaft in an insulated manner; and the negative electrode tab is fixedly connected to the negative electrode terminal cover, and is connected to the central shaft in an insulated manner.

Further, a first heat dissipation rib is arranged outside the positive electrode cover, and a second heat dissipation rib is arranged outside the negative electrode cover.

Further, the base body is rectangular, the accommodation cavity is a through hole, and an axial direction of the through hole is consistent with a height direction of the base body.

Further, a third heat dissipation rib is arranged on an outer side wall of the base body.

Further, the base body is provided with a safety valve, and the safety valve is used to discharge gas in the accommodation cavity.

The large-capacity unit cell provided in the present invention can achieve the following beneficial effects:
In a production process of the electrode group of the large-capacity unit cell, the positive electrode sheet, the negative electrode sheet, and the separator are wound around the central shaft, and after a winding radius meets the requirement, the electrode sheets and the separator do not need to be pulled from the central shaft, wherein as a constituent part of the electrode group, the central shaft is used for the production of the large-capacity unit cell. Because the wound electrode sheets and the separator do not need to be pulled from the central shaft, electrode sheets at layers and two sides of the separator can keep good uniformity, and the case where the separator inside the electrode group is damaged due to a pull can also be reduced. The above two points can both greatly reduce a potential security hazard that a short circuit occurs inside the electrode group of the large-capacity unit cell, so that the winding radius of the electrode group of the large-capacity cell is increased and the length of an electrode sheet is increased, thereby making the capacity of the large-capacity unit cell relatively large.

### Brief Description of the Drawings

In order to illustrate the technical solutions in the particular embodiments of the present invention or in the prior art more clearly, the accompanying drawings to be used in the description of the particular embodiments or the prior art will be briefly introduced below. Obviously, the accompanying drawings in the following description show some of the embodiments of the present invention, and those of ordinary skill in the art may still derive other drawings from these accompanying drawings without creative effort.
FIG. 1 is a schematic structural diagram of a large-capacity unit cell using electrode groups connected in parallel that is provided in an embodiment of the present invention;
FIG. 2 is a partial schematic structural diagram of a large-capacity unit cell using electrode groups connected in parallel that is provided in an embodiment of the present invention;
FIG. 3 is a front sectional view of a large-capacity unit cell using electrode groups connected in parallel that is provided in an embodiment of the present invention; and
FIG. 4 is a front sectional view of a large-capacity unit cell using electrode groups connected in series.

Reference signs: 100-Base body; 110-Accommodation cavity; 120-Third heat dissipation rib; 200-Electrode group module; 210-Electrode group; 220-Positive electrode cover; 221-First heat dissipation rib; 230-Negative electrode cover; 231-Second heat dissipation rib; 240-Positive electrode terminal cover; 250-Negative electrode terminal cover; 260-Positive electrode tab; 270-Negative electrode tab; and 280-Central shaft.

### Detailed Description of Embodiments

The technical solutions in the present invention will be described clearly and completely below with reference to embodiments. Obviously, the described embodiments are some of, rather than all of, the embodiments of the present invention.

The large-capacity unit cell provided in the present invention is as defined in present claim 1.

In a production process of the electrode group 210 of the large-capacity unit cell, the positive electrode sheet, the negative electrode sheet, and the separator are wound around the central shaft 280, and after a winding radius meet the requirement, the electrode sheets and the separator do not need to be pulled from the central shaft 280, wherein as a constituent part of the electrode group 210, the central shaft 280 is used for the production of the large-capacity unit cell. Because the wound electrode sheets and the separator do not need to be pulled from the central shaft 280, electrode sheets at layers and two sides of the separator can keep good uniformity, and the case where the separator inside the electrode group 210 is damaged due to a pull can also be reduced. The above two points can both greatly reduce a potential security hazard that a short circuit occurs inside the electrode group 210 of the large-capacity unit cell, so that the winding radius of the electrode group 210 of the large-capacity cell is increased and the length of an electrode sheet is increased, thereby making the capacity of the large-capacity unit cell relatively large.

In addition, in the large-capacity unit cell, the electrode group modules 200 are connected in parallel. When the electrode group modules 200 are connected in parallel, a discharging current of the large-capacity unit cell is increased, so that the capacity of the cell is improved. Regardless of whether the electrode group modules 200 are connected in parallel, in series, or in a hybrid manner, compared with ordinary unit cells that are connected in parallel, in series, or in a hybrid manner, the large-capacity unit cell has a production process that is simplified, and can effectively avoid the occurrence of a short circuit when the ordinary unit cells are externally connected.

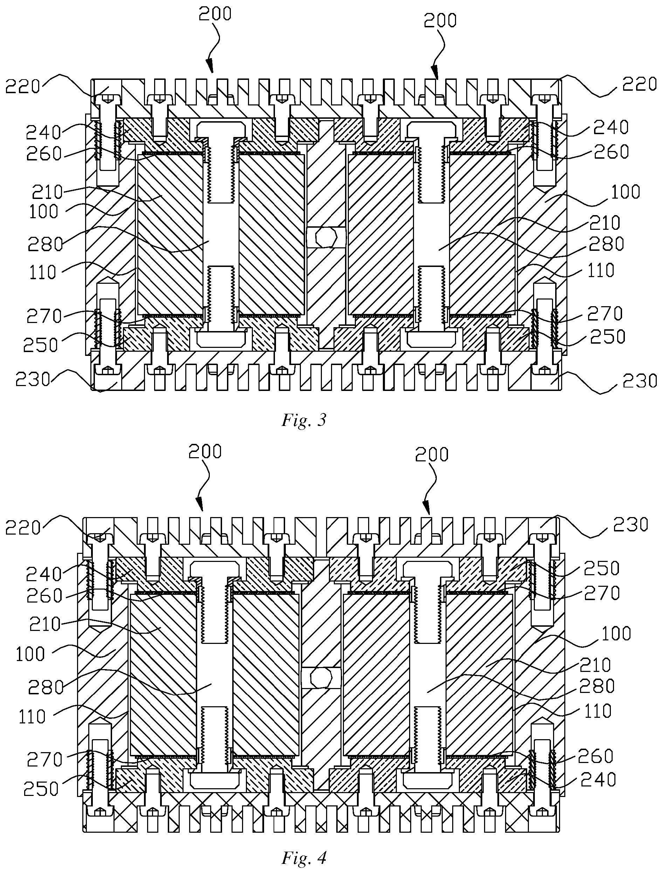

Specifically, in this embodiment, as shown in FIGs. 3 and 4, the accommodation cavity 110 passes through the base body 100, and the positive electrode terminal and the negative electrode terminal of the electrode group module 200 are respectively located at the two ends of the accommodation cavity 110; and the electrode group module 200 further comprises a positive electrode cover 220 and a negative electrode cover 230, the positive electrode cover 220 covers a positive electrode terminal of the electrode group 210, the negative electrode cover 230 covers a negative electrode terminal of the electrode group 210, and the positive electrode cover 220 and the negative electrode cover 230 are both fixedly connected to the base body 100. The positive electrode terminal and the negative electrode terminal of the electrode group module 200 are respectively located at the two ends of the accommodation cavity 110, which effectively reduces the occurrence of a short circuit of the positive electrode terminal and the negative electrode terminal, and reduces the potential security hazard. The positive electrode terminal and the negative electrode terminal of the large-capacity unit cell are respectively located at the two opposite ends of the base body 100, and heat generated inside the cell may be conducted away and dissipated from the two ends, thereby improving the heat dissipation performance of the large-capacity unit cell. In addition, the positive electrode cover 220 and the positive electrode terminal of the electrode group 210, and the negative electrode cover 230 and the negative electrode terminal of the electrode group 210 are both connected in a surface contact manner, so that the internal resistance of the large-capacity unit cell is relatively small, and thus the amount of heat generated inside the large-capacity unit cell is relatively small, and because the internal resistance is relatively small, the heat dissipation speed of the large-capacity unit cell is relatively fast, and the heat dissipation performance is further improved.

Specifically, the positive electrode cover 220 and the negative electrode cover 230 may be both fixedly connected to the base body 100 by means of a second threaded fastener. For connection through the second threaded fastener, the positive electrode cover 220 and the negative electrode cover 230 may be conveniently to detached and installed without damaging any one of the positive electrode cover 220, the negative electrode cover 230, and the base body 100.

In this embodiment, as shown in FIG. 3, two, electrode group modules 200 are provided, the two electrode group modules 200 are connected in parallel, and are placed in the same direction in the accommodation cavity 110; and the positive electrode covers 220 of the two electrode group modules 200 are of an integral structure, and the negative electrode covers 230 of the two electrode group modules 200 are of an integral structure. In the large-capacity unit cell, two positive electrode covers 220 are integrally connected, and two negative electrode covers 230 are integrally connected, so that the two electrode group modules 200 are connected in parallel, a discharging current is increased, and thus the cell capacity of the large-capacity unit cell is improved.

Specifically, a plurality of positive electrode covers 220 are integrally formed, and a plurality of negative electrode covers 230 are integrally formed, which not only simplifies the assembly process, but also improves the assembly precision, thereby improving the stability of connection between the positive electrode cover 220 and the base body 100, and between the negative electrode cover 230 and the base body 100, and thus improving the stability of the large-capacity unit cell.

In addition, when the electrode group modules 200 of the large-capacity unit cell are connected in parallel, the positive electrode covers 220 or the negative electrode covers 230 may also be connected by connectors. Specifically, the connectors may comprise a first connector and a second connector. All of the positive electrode covers 220 may be connected by using the first connector, and all of the negative electrode covers 230 may be connected by using the second connector, so as to achieve the effect of connecting the electrode group modules 200 in parallel.

As shown in FIG. 4, two electrode group modules 200 may be provided, the two electrode group modules 200 may be connected in series, and are placed in opposite directions in the accommodation cavity 110; and the positive electrode cover 220 of one of the electrode group modules 200 and the negative electrode cover 230 of the other electrode group module 200 may be of an integral structure. In the large-capacity unit cell, the positive electrode cover 220 of one of the electrode group modules 200 is connected to the negative electrode cover 230 of the other electrode group module 200, so that the two electrode group modules 200 are connected in series, and for the same load, the voltage of the large-capacity unit cell with the two electrode group modules 200 connected in series is increased, and the discharging duration is increased.

In addition, when the electrode group modules 200 of the large-capacity unit cell are connected in series, the positive electrode covers 220 and the negative electrode covers 230 may also be connected by connectors. The connectors further comprise a third connector, wherein the third connector is used to connect the positive electrode cover 220 of one electrode group module 200 to the negative electrode cover 230 of the other electrode group module 200, so as to achieve the effect of connecting the electrode group modules 200 in series.

It should be noted that, there may also be three, four, five ... electrode group modules 200 that are to be connected in parallel or in series, which can be connected in parallel or in series according to actual needs, and meanwhile, the base body 100, the accommodation cavities 110 of the base body 100, the positive electrode cover 220, the negative electrode cover 230, etc. are also changed accordingly.

When three or more electrode group modules 200 are provided, the electrode group modules 200 may also be connected in a hybrid manner, that is, the cell capacity and the cell voltage are increased in the way of simultaneously increasing the current and the discharging duration.

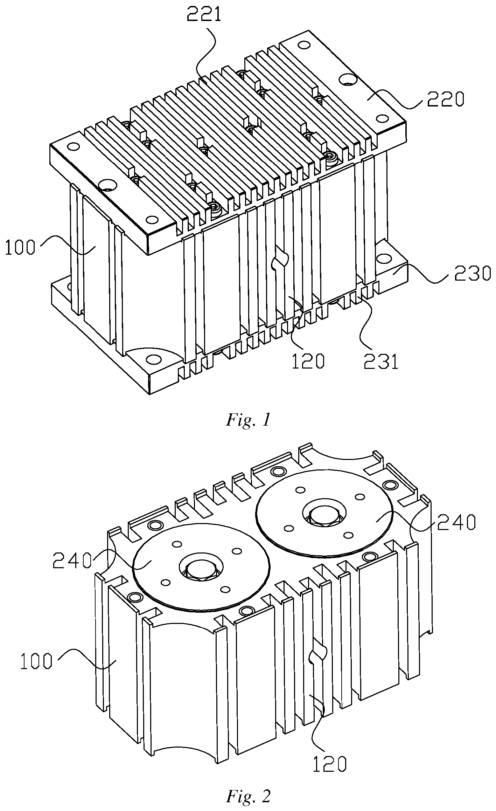

In this embodiment, as shown in FIGs. 2 to 4, the electrode group module 200 further comprise a positive electrode terminal cover 240 and a negative electrode terminal cover 250, the positive electrode terminal cover 240 is arranged between the positive electrode cover 220 and the positive electrode terminal of the electrode group 210, and the negative electrode terminal cover 250 is arranged between the negative electrode cover 230 and the negative electrode terminal of the electrode group 210; the positive electrode terminal cover 240 is fixedly connected to the positive electrode cover 220, and is connected to the central shaft 280 in an insulated manner; and the negative electrode terminal cover 250 is fixedly connected to the negative electrode cover 230, and is connected to the central shaft 280 in an insulated manner.

Specifically, the positive electrode terminal cover 240 may be connected to the positive electrode cover 220 by means of a third threaded fastener, and the negative electrode terminal cover 250 may also be connected to the negative electrode cover 230 by means of a third threaded fastener.

Specifically, in this embodiment, the positive electrode terminal cover 240 and the positive electrode cover 220 may be of an integral structure, and the negative electrode terminal cover 250 and the negative electrode cover 230 may be of an integral structure, so that the structure of the large-capacity unit cell can be further simplified.

Specifically, as shown in FIGs. 3 and 4, a threaded hole is provided at each of two ends of the central shaft 280, the positive electrode terminal cover 240 is connected to the central shaft 280 by means of a first threaded fastener, and an insulating part is arranged between the first threaded fastener and the positive electrode terminal cover 240; and the negative electrode terminal cover 250 is also connected to the central shaft 280 by means of a first threaded fastener, and an insulating part is also arranged between the first threaded fastener and the negative electrode terminal cover 250.

The insulating part is used to avoid the occurrence of a short circuit inside the electrode group 210 due to the first threaded fastener. Specifically, the insulating part may be sleeved on the first threaded fastener and located between the first threaded fastener and the positive electrode terminal cover 240 or between the first threaded fastener and the negative electrode terminal cover 250.

In this embodiment, the material of the base body 100 may be engineering plastic. The engineering plastic has an insulation property, and thus can effectively avoid a short circuit between a positive electrode and a negative electrode.

In this embodiment, the electrode group module 200 further comprises a positive electrode tab 260 and a negative electrode tab 270, the positive electrode tab 260 is arranged between the positive electrode terminal cover 240 and the positive electrode terminal of the electrode group 210, and the negative electrode tab 270 is arranged between the negative electrode terminal cover 250 and the negative electrode terminal of the electrode group 210; the positive electrode tab 260 is fixedly connected to the positive electrode terminal cover 240, and is connected to the central shaft 280 in an insulated manner; and the negative electrode tab 270 is fixedly connected to the negative electrode terminal cover 250, and is connected to the central shaft 280 in an insulated manner. The positive electrode tab 260 is connected to the positive electrode sheet and the positive electrode terminal cover 240, and the negative electrode tab 270 is connected to the negative electrode sheet and the negative electrode terminal cover 250. The positive electrode terminal cover 240 is threadedly connected to the central shaft 280, which increases the connection firmness and can also enable the positive electrode tab 260 to be in close contact with the positive electrode sheet, and the positive electrode tab 260 to be in close contact with the positive electrode terminal cover 240, thereby reducing the internal resistance brought by a virtual connection and ensuring good electrical conductivity. Similarly, the negative electrode terminal cover 250 is threadedly connected to the central shaft 280, which increases the connection firmness and can also enable the negative electrode tab 270 to be in close contact with the negative electrode sheet, and the negative electrode tab 270 to be in close contact with the negative electrode terminal cover 250, thereby reducing the internal resistance brought by a virtual connection and ensuring good electrical conductivity.

In this embodiment, as shown in FIG. 1, a first heat dissipation rib 221 is arranged outside the positive electrode cover 220, and a second heat dissipation rib 231 is arranged outside the negative electrode cover 230. The first heat dissipation rib 221 and the second heat dissipation rib 231 increase the heat dissipation area of the positive electrode cover 220 and the negative electrode cover 230, thereby enhancing the heat dissipation performance of the large-capacity unit cell.

In this embodiment, the base body 100 is rectangular, the accommodation cavity 110 is a through hole, and an axial direction of the through hole is consistent with a height direction of the base body 100. Due to a rectangular appearance, when the large-capacity unit cells are used to constitute a power battery or another energy storage battery, it is easy to arrange, and a plurality of large-capacity unit cells have good uniformity.

In this embodiment, a third heat dissipation rib 120 is be arranged on an outer side wall of the base body 100 to further enhance the heat dissipation performance of the large-capacity unit cell.

In addition, in this embodiment, the first threaded fastener, the second threaded fastener, and the third threaded fastener all increase the closeness between connectors, thereby reducing the internal resistance of the large-capacity unit cell, reducing the temperature inside the cell, and also allowing the heat inside the cell to be quickly conducted away.

Specifically, the first threaded fastener, the second threaded fastener, and the third threaded fastener may each be a bolt.

In this embodiment, the base body 100 is provided with a safety valve, and the safety valve is used to discharge gas in the accommodation cavity 110. Specifically, the accommodation cavities 110 where the electrode group modules 200 connected in parallel are located may be in communication, and the safety valve may be arranged in a communication passage, so that gas in two adjacent accommodation cavities 110 can be discharged through a common safety valve.

In addition, the number of safety valves may also be consistent with the number of electrode group modules 200 in each large-capacity unit cell, and safety valves are in one-to-one correspondence with positive electrode terminals of electrode group modules 200, or safety valves are in one-to-one correspondence with negative electrode terminals of electrode group modules 200; and the number of safety valves may also be twice the number of electrode group modules 200 in each large-capacity unit cell, and each of the electrode group modules 200 corresponds to two safety valves, wherein one of the two safety valves corresponds to the positive electrode terminal of the electrode group module 200, and the other of the two safety valves corresponds to the negative electrode terminal of the electrode group module 200.

It should be noted that the specific location of the safety valve on the base body 100 is not limited, provided that the functions of discharging gas inside the cell and reducing the potential security hazard can be implemented.

In addition, compared with a unit cell with a wound-type electrode group that has the same capacity as the large-capacity unit cell, the large-capacity unit cell uses electrode group modules 200 connected in parallel manner, and therefore the winding radius of a single electrode group 210 is small and the heat dissipation performance is accordingly better; compared with a battery pack composed of unit cells that has the same capacity as the large-capacity unit cell, the large-capacity unit cell has a smaller volume and a greater energy density due to the use of an internal connection manner; and compared with a unit cell with a non-cylindrically wound electrode group 210, the large-capacity unit cell has a cylindrically wound electrode group 210, and the electrode group 210 has a better compressive property in an axial direction.

Finally, it should be noted that the above embodiments are merely used for illustrating, rather than limiting, the technical solution of the present invention.

## Claims

1. A large-capacity unit cell comprising a base body (100) provided with a plurality of accommodation cavities (110), each of the accommodation cavities (110) being provided with an electrode group module (200), wherein the electrode group modules (200) are connected in parallel; and
the electrode group module (200) comprises a central shaft (280) and an electrode group (210) wound around the central shaft (280), the electrode group (210) comprises a positive electrode sheet, a negative electrode sheet and a separator, and the separator is used to separate the positive electrode sheet from the negative electrode sheet; and
wherein the accommodation cavity (110) passes through the base body (100), and a positive electrode terminal and a negative electrode terminal of the electrode group module (200) are respectively located at two ends of the accommodation cavity (110); and
the electrode group module (200) further comprises a positive electrode cover (220) and a negative electrode cover (230), the positive electrode cover (220) covers a positive electrode terminal of the electrode group (210), the negative electrode cover (230) covers a negative electrode terminal of the electrode group (210), and the positive electrode cover (220) and the negative electrode cover (230) are both fixedly connected to the base body (100); and
wherein two electrode group modules (200) are provided, the two electrode group modules (200) are connected in parallel, and are placed in the same direction in the accommodation cavity (110); and
the positive electrode covers (220) of the two electrode group modules (200) are of an integral structure, and the negative electrode covers (230) of the two electrode group modules (200) are of an integral structure; and
wherein the electrode group module (200) further comprises a positive electrode terminal cover (240) and a negative electrode terminal cover (250), the positive electrode terminal cover (240) is arranged between the positive electrode cover (220) and the positive electrode terminal of the electrode group (210), and the negative electrode terminal cover (250) is arranged between the negative electrode cover (230) and the negative electrode terminal of the electrode group (210);
the positive electrode terminal cover (240) is fixedly connected to the positive electrode cover (220), and is connected to the central shaft (280) in an insulated manner; and the negative electrode terminal cover (250) is fixedly connected to the negative electrode cover (230), and is connected to the central shaft (280) in an insulated manner;
**characterized in that**
two ends of the central shaft (280) are both provided with a threaded hole, the positive electrode terminal cover (240) is connected to the central shaft (280) by means of a first threaded fastener, and an insulating part is arranged between the first threaded fastener and the positive electrode terminal cover (240);
and/or the negative electrode terminal cover (250) is connected to the central shaft (280) by means of a first threaded fastener, and an insulating part is arranged between the first threaded fastener and the negative electrode terminal cover (250).

2. The large-capacity unit cell according to claim 1, **characterized in that** the electrode group module (200) further comprises a positive electrode tab (260) and a negative electrode tab (270), the positive electrode tab (260) is arranged between the positive electrode terminal cover (240) and the positive electrode terminal of the electrode group (210), and the negative electrode tab (270) is arranged between the negative electrode terminal cover (250) and the negative electrode terminal of the electrode group (210);
the positive electrode tab (260) is fixedly connected to the positive electrode terminal cover (240), and is connected to the central shaft (280) in an insulated manner; and the negative electrode tab (270) is fixedly connected to the negative electrode terminal cover (250), and is connected to the central shaft (280) in an insulated manner.

3. The large-capacity unit cell according to claim 1, **characterized in that** a first heat dissipation rib (221) is arranged outside the positive electrode cover (220), and a second heat dissipation rib (231) is arranged outside the negative electrode cover (230).

4. The large-capacity unit cell according to claim 1, **characterized in that** the base body (100) is rectangular, the accommodation cavity (110) is a through hole, and an axial direction of the through hole is consistent with a height direction of the base body (100).

5. The large-capacity unit cell according to claim 1, **characterized in that** a third heat dissipation rib (120) is arranged on an outer side wall of the base body (100).

6. The large-capacity unit cell according to claim 1, **characterized in that** the base body (100) is provided with a safety valve, and the safety valve is used to discharge gas in the accommodation cavity (110).

## Patentansprüche

1. Einheitszelle mit großer Kapazität, umfassend einen Grundkörper (100), der mit einer Mehrzahl von Aufnahmehohlräumen (110) versehen ist, wobei jeder der Aufnahmehohlräume (110) mit einem Elektrodengruppenmodul (200) versehen ist, wobei die Elektrodengruppenmodule (200) parallel geschaltet sind; und das Elektrodengruppenmodul (200) eine Zentralwelle (280) und eine um die Zentralwelle (280) gewickelte Elektrodengruppe (210) umfasst, die Elektrodengruppe (210) ein positives Elektrodenblatt, ein negatives Elektrodenblatt und einen Separator umfasst, und der Separator verwendet wird, um das positive Elektrodenblatt von dem negativen Elektrodenblatt zu trennen; und
wobei der Aufnahmehohlraum (110) durch den Grundkörper (100) verläuft und ein positiver Elektrodenanschluss und ein negativer Elektrodenanschluss des Elektrodengruppenmoduls (200) jeweils an zwei Enden des Aufnahmehohlraums (110) angeordnet sind; und
das Elektrodengruppenmodul (200) ferner eine positive Elektrodenabdeckung (220) und eine negative Elektrodenabdeckung (230) umfasst, die positive Elektrodenabdeckung (220) einen positiven Elektrodenanschluss der Elektrodengruppe (210) abdeckt, die negative Elektrodenabdeckung (230) einen negativen Elektrodenanschluss der Elektrodengruppe (210) abdeckt, und die positive Elektrodenabdeckung (220) und die negative Elektrodenabdeckung (230) beide fest mit dem Grundkörper (100) verbunden sind; und
wobei zwei Elektrodengruppenmodule (200) vorgesehen sind, die beiden Elektrodengruppenmodule (200) parallel geschaltet sind und in der gleichen Richtung in dem Aufnahmehohlraum (110) angeordnet sind; und
die positiven Elektrodenabdeckungen (220) der beiden Elektrodengruppenmodule (200) einstückig aufgebaut sind, und die negativen Elektrodenabdeckungen (230) der beiden Elektrodengruppenmodule (200) einstückig aufgebaut sind; und
wobei das Elektrodengruppenmodul (200) ferner eine positive Elektrodenanschlussabdeckung (240) und eine negative Elektrodenanschlussabdeckung (250) umfasst, wobei die positive Elektrodenanschlussabdeckung (240) zwischen der positiven Elektrodenabdeckung (220) und dem positiven Elektrodenanschluss der Elektrodengruppe (210) angeordnet ist, und die negative Elektrodenanschlussabdeckung (250) zwischen der negativen Elektrodenabdeckung (230) und dem negativen Elektrodenanschluss der Elektrodengruppe (210) angeordnet ist;
die positive Elektrodenanschlussabdeckung (240) fest mit der positiven Elektrodenabdeckung (220) verbunden und mit der Zentralwelle (280) isoliert verbunden ist; und die negative Elektrodenanschlussabdeckung (250) fest mit der negativen Elektrodenabdeckung (230) verbunden und mit der Zentralwelle (280) isoliert verbunden ist;
**dadurch gekennzeichnet, dass**
zwei Enden der Zentralwelle (280) beide mit einem Gewindeloch versehen sind, die positive Elektrodenanschlussabdeckung (240) mittels eines ersten Gewindeverbinders mit der Zentralwelle (280) verbunden ist, und ein Isolierteil zwischen dem ersten Gewindeverbinder und der positiven Elektrodenanschlussabdeckung (240) angeordnet ist;
und/oder die negative Elektrodenanschlussabdeckung (250) mittels eines ersten Gewindeverbinders mit der Zentralwelle (280) verbunden ist, und ein Isolierteil zwischen dem ersten Gewindeverbinder und der negativen Elektrodenanschlussabdeckung (250) angeordnet ist.

2. Einheitszelle mit großer Kapazität nach Anspruch 1, **dadurch gekennzeichnet, dass** das Elektrodengruppenmodul (200) ferner einen positiven Elektrodensteg (260) und einen negativen Elektrodensteg (270) umfasst, wobei der positive Elektrodensteg (260) zwischen der positiven Elektrodenanschlussabdeckung (240) und dem positiven Elektrodenanschluss der Elektrodengruppe (210) angeordnet ist, und der negative Elektrodensteg (270) zwischen der negativen Elektrodenanschlussabdeckung (250) und dem negativen Elektrodenanschluss der Elektrodengruppe (210) angeordnet ist;
der positive Elektrodensteg (260) fest mit der positiven Elektrodenanschlussabdeckung (240) verbunden und mit der Zentralwelle (280) isoliert verbunden ist; und der negative Elektrodensteg (270) fest mit der negativen Elektrodenanschlussabdeckung (250) verbunden und mit dem zentralen Schaft (280) isoliert verbunden ist.

3. Einheitszelle mit großer Kapazität nach Anspruch 1, **dadurch gekennzeichnet, dass** eine erste Wärmeableitungsrippe (221) außerhalb der positiven Elektrodenabdeckung (220) und eine zweite Wärmeableitungsrippe (231) außerhalb der negativen Elektrodenabdeckung (230) angeordnet ist.

4. Einheitszelle mit großer Kapazität nach Anspruch 1, **dadurch gekennzeichnet, dass** der Grundkörper (100) rechteckig ist, der Aufnahmehohlraum (110) ein Durchgangsloch ist und eine axiale Richtung des Durchgangslochs mit einer Höhenrichtung des Grundkörpers (100) übereinstimmt.

5. Einheitszelle mit großer Kapazität nach Anspruch 1, **dadurch gekennzeichnet, dass** eine dritte Wärmeableitungsrippe (120) an einer äußeren Seitenwand des Grundkörpers (100) angeordnet ist.

6. Einheitszelle mit großer Kapazität nach Anspruch 1, **dadurch gekennzeichnet, dass** der Grundkörper (100) mit einem Sicherheitsventil versehen ist und das Sicherheitsventil zum Ablassen von Gas in den Aufnahmehohlraum (110) verwendet wird.

## Revendications

1. Cellule unitaire de grande capacité comprenant un corps de base (100) pourvu d'une pluralité de cavités de logement (110), chacune des cavités de logement (110) étant pourvue d'un module de groupe d'électrodes (200), dans laquelle les modules de groupe d'électrodes (200) sont reliés en parallèle ; et
le module de groupe d'électrodes (200) comprend un arbre central (280) et un groupe d'électrodes (210) enroulé autour de l'arbre central (280), le groupe d'électrodes (210) comprend une feuille d'électrode positive, une feuille d'électrode négative et un séparateur, et le séparateur est utilisé pour séparer la feuille d'électrode positive de la feuille d'électrode négative ; et
dans laquelle la cavité de logement (110) traverse le corps de base (100), et une borne d'électrode positive et une borne d'électrode négative du module de groupe d'électrodes (200) sont respectivement situées au niveau des deux extrémités de la cavité de logement (110) ; et
le module de groupe d'électrodes (200) comprend en outre une enveloppe d'électrode positive (220) et une enveloppe d'électrode négative (230), l'enveloppe d'électrode positive (220) enveloppe une borne d'électrode positive du groupe d'électrodes (210), l'enveloppe d'électrode négative (230) enveloppe une borne d'électrode négative du groupe d'électrodes (210), et l'enveloppe d'électrode positive (220) et l'enveloppe d'électrode négative (230) sont tous deux reliées de manière fixe au corps de base (100) ; et
dans laquelle deux modules de groupe d'électrodes (200) sont fournis, les deux modules de groupe d'électrodes (200) sont reliés en parallèle, et sont placés dans la même direction dans la cavité de logement (110) ; et
les enveloppes d'électrodes positives (220) des deux modules de groupe d'électrodes (200) sont d'une structure monobloc, et les enveloppes d'électrodes négatives (230) des deux modules de groupe d'électrodes (200) sont d'une structure monobloc ; et
dans laquelle le module de groupe d'électrodes (200) comprend en outre une enveloppe de borne d'électrode positive (240) et une enveloppe de borne d'électrode négative (250), l'enveloppe de borne d'électrode positive (240) est agencée entre l'enveloppe d'électrode positive (220) et la borne d'électrode positive du groupe d'électrodes (210), et l'enveloppe de borne d'électrode négative (250) est agencée entre l'enveloppe d'électrode négative (230) et la borne d'électrode négative du groupe d'électrodes (210) ;
et l'enveloppe de borne d'électrode positive (240) est reliée de manière fixe à l'enveloppe d'électrode positive (220) et est reliée à l'arbre central (280) de manière isolée ; et l'enveloppe de borne d'électrode négative (250) est reliée de manière fixe à l'enveloppe d'électrode négative (230) et est reliée à l'arbre central (280) de manière isolée ; **caractérisée en ce que**
les deux extrémités de l'arbre central (280) sont toutes deux pourvues d'un trou fileté, l'enveloppe de borne d'électrode positive (240) est reliée à l'arbre central (280) au moyen d'une première attache filetée, et une partie isolante est agencée entre la première attache filetée et l'enveloppe de borne d'électrode positive (240) ;
et/ou l'enveloppe de borne d'électrode négative (250) est reliée à l'arbre central (280) au moyen d'une première attache filetée, et une partie isolante est agencée entre la première attache filetée et l'enveloppe de borne d'électrode négative (250).

2. Cellule unitaire de grande capacité selon la revendication 1, **caractérisée en ce que** le module de groupe d'électrodes (200) comprend en outre une languette d'électrode positive (260) et une languette d'électrode négative (270), la languette d'électrode positive (260) est agencée entre l'enveloppe de borne d'électrode positive (240) et la borne d'électrode positive du groupe d'électrodes (210), et la languette d'électrode négative (270) est agencée entre l'enveloppe de borne d'électrode négative (250) et la borne d'électrode négative du groupe d'électrodes (210) ;
et la languette d'électrode positive (260) est reliée de manière fixe à l'enveloppe de borne d'électrode positive (240) et est reliée à l'arbre central (280) de manière isolée ; et la languette d'électrode négative (270) est reliée de manière fixe à l'enveloppe de borne d'électrode négative (250) et est reliée à l'arbre central (280) de manière isolée.

3. Cellule unitaire de grande capacité selon la revendication 1, **caractérisée en ce qu'**une première nervure de dissipation de chaleur (221) est agencée à l'extérieur de l'enveloppe d'électrode positive (220), et qu'une deuxième nervure de dissipation de chaleur (231) est agencée à l'extérieur de l'enveloppe d'électrode négative (230).

4. Cellule unitaire de grande capacité selon la revendication 1, **caractérisée en ce que** le corps de base (100) est rectangulaire, la cavité de logement (110) est un trou traversant, et une direction axiale du trou traversant est conforme à une direction de hauteur du corps de base (100).

5. Cellule unitaire de grande capacité selon la revendication 1, **caractérisée en ce qu'**une troisième nervure de dissipation de chaleur (120) est agencée sur une paroi latérale externe du corps de base (100).

6. Cellule unitaire de grande capacité selon la revendication 1, **caractérisée en ce que** le corps de base (100) est pourvu d'une soupape de sécurité, et que la soupape de sécurité est utilisée pour évacuer les gaz dans la cavité de logement (110).
